## Europäisches Patentamt

## European Patent Office

## Office européen des brevets

(11) Publication number: **0 024 421**
**B1**

# EUROPEAN PATENT SPECIFICATION

(45) Date of publication of patent specification: **30.04.86**

(51) Int. Cl.⁴: **G 01 M 3/20**

(21) Application number: **80900534.1**

(22) Date of filing: **27.02.80**

(86) International application number:
**PCT/US80/00189**

(87) International publication number:
**WO 80/01952 18.09.80 Gazette 80/21**

(54) **METHOD AND APPARATUS FOR THE LEAK TESTING OF FILTERS.**

(30) Priority: **05.03.79 US 17289**

(43) Date of publication of application:
**11.03.81 Bulletin 81/10**

(45) Publication of the grant of the patent:
**30.04.86 Bulletin 86/18**

(84) Designated Contracting States:
**AT CH DE FR GB LU NL SE**

(56) References cited:
**FR-A-2 025 957**
**US-A-2 297 082**
**US-A-2 699 287**
**US-A-3 185 181**
**US-A-3 323 437**
**US-A-3 385 036**
**US-A-3 395 514**
**US-A-3 519 024**
**US-A-3 522 724**
**US-A-3 712 114**
**US-A-3 749 130**
**US-A-3 782 884**
**US-A-3 865 561**
**US-A-3 949 594**
**US-A-4 055 075**

(73) Proprietor: **FLANDERS FILTERS, INC.**
**Post Office Box 1219**
**Washington, NC 27889 (US)**

(72) Inventor: **WILCOX, David E.**
**1198 Navigator Drive**
**Ventura, CA (US)**
Inventor: **ALLAN, Thomas T.**
**Rt.2 Box 173**
**Washington, NC (US)**

(74) Representative: **Warren, Keith Stanley et al**
**BARON & WARREN 18 South End Kensington**
**London W8 5BU (GB)**

Courier Press, Leamington Spa, England.

## Description

The present invention relates to a housing for mounting one or more banks of high efficiency air filters in an air duct system, and which requires minimum space, permits the leak testing of the filters from outside the housing, and which permits the identification of a leaking filter in the bank. In this context, reference is made to the divisional application EP—A—0150266 published on 7-8-85.

In the manufacture of high efficiency air filtration systems, the filters, housings, and related components are usually initially tested as the final manufacturing step at the factory to locate any leaks and insure compliance with the desired efficiency rating. In addition, it is recognized that in-place testing of the completed installation is essential to insure leak tightness of the housing and filters in their assembled form. Also, in-place tests are usually conducted after each change of a filter in the system to insure proper installation of the new filter, as well as at regular intervals after installation to detect any deterioration of the gaskets or clamping devices, or the development of weld cracks or the like in the housing which result in leaks. Such periodic in-place testing is particularly important where harmful materials, such as potentially radioactive substances, dangerous viable organisms, or carcinogenic or toxic materials, are removed from the airstream by the filtration system.

Both factory and in-place efficiency testing of filters and filter installations conventionally utilizes either a monodispersed or a polydispersed aerosol of dioctyl phthalate (DOP) droplets or particles which have a light-scattering mean diameter of 0.3 or 0.7 microns, respectively. The DOP is introduced into the airstream at a point in the duct far enough upstream of the filter or filter bank to assure complete dispersion by the time it reaches the filter or bank of filters. An upstream sampling device is usually provided immediately upstream of the filter to determine the concentration of the DOP in the duct, and a downstream sampling device is provided to detect leakage. A portion of the airstream is withdrawn from the duct through the sampling devices and conveyed to an external photometric light-scattering instrument or the like which is designed to determine the DOP concentration in both the upstream and downstream samples.

In order to insure that the air-DOP mixture charged to the filters is thoroughly mixed to obtain a substantially uniform dispersion, and that the upstream sample is representative of the DOP concentration at that point, it has been recommended that the DOP be introduced at least ten duct diameters upstream of the filters, or introduced upstream of baffles or turning vanes in the duct. Also, the use of a Stairmand disk positioned three to five duct diameters upstream of the filters has been recommended for this purpose, see for example Chapter 7 of "Design, Construction, and Testing of High Efficiency Air Filtration Systems for Nuclear Applications" by Burchsted and Fuller, published January 1970 by Oak Ridge National Laboratory. Thus in order to properly introduce the DOP into the airstream utilizing these recommended procedures, extra equipment and a great deal of space is required.

It is also presently recommended that the downstream sampling port be located a considerable distance downstream of the filter, and preferably downstream of the exhaust fan, to insure that any DOP which leaks through the filter becomes sufficiently mixed with the filtered air so that the leak will be detected no matter where in the airstream the sample is withdrawn. This procedure not only serves to further increase the space requirements of the test apparatus, but also, it reduces the assurance that a leak will be detected by reason of the dilution effect of the leaking DOP in the great volume of filtered air. As will be apparent, this dilution effect is particularly pronounced where a large bank of filters is employed.

In installations requiring multiple banks of filters employed in series, the space requirements for introducing the DOP, and withdrawing the samples, are multiplied since the banks must be separated a distance sufficient to accomplish the above objectives. In an attempt to alleviate this problem, it has been proposed to employ temporary ducts between the various banks with suitable valves therein, and with the temporary ducts serving to selectively isolate each bank in the apparatus during the test procedure and introduce the DOP and withdraw the samples at an appropriate distance from each bank. However, this proposed system is not entirely satisfactory since it requires a great deal of extra equipment which is only used during the test procedure, and the use of temporary ducts adds additional problems of possible leakage through the various required connections and valves.

Where the above tests indicate the presence of an unacceptable leak, it is standard practice for a workman to physically enter the duct at the downstream side of the filter bank to conduct leak probing of individual filters, and thereby permit identification and replacement of the faulty filter. In some cases, it is also necessary for the workman to enter the upstream side to locate the source of the leakage problem. Such direct personnel access is often impractical and/or dangerous however, either because of the system configuration, or because of high radioactivity levels or the presence of other dangerous materials in the airstream. In such cases, it has been previously proposed that the housing incorporate remotely operated long-handled probes which are able to cover the entire downstream area of the filter bank, or alternatively, that the workman don protective clothing prior to entering the duct. As will be apparent, neither of these alternatives is satisfactory, since the design and fabrication of suitable remotely operated probes significantly adds to the cost of the housing, and the physical entry of a workman into the duct greatly increases the risk of contamination to himself as well as other workers.

Still another problem associated with the above described conventional testing procedure for a bank of filters is the fact that a great deal of DOP must be fed into the airstream to assure an adequate dispersion in front of each filter. Since the area of the bank may be quite extensive, it is often difficult to achieve an even distribution of the DOP over the face of the entire bank, even when the DOP is introduced ten duct diameters upstream as recommended, and in addition, it is difficult to generate a sufficient quantity of the DOP for such large banks. Also, the DOP tends to become deposited on all of the filters while each individual filter in the system is being probed, thereby unduly loading the filters and increasing their resistance to the passage of the air.

Applicants' prior U.S. Patent No. 4,055,075 discloses a method and apparatus for the leak testing of filters wherein the above noted disadvantages of the earlier techniques and equipment are effectively overcome. More particularly, the applicants' prior patent discloses a test housing wherein the DOP is introduced and dispersed into the duct at a location closely adjacent the upstream face of the filter, thereby to minimize floor space by means of an electrostatic dispersion device, and wherein each filter is charged with DOP and tested individually to permit the ready identification of a leaking filter without manually entering the duct and probing the filters. Further, in one embodiment of the patented housing, there is provision for selectively condensing and imparting turbulence to the airstream immediately downstream of the filter so that the sample may be withdrawn at a location immediately downstream of the filter, thereby further to reduce the space requirements. This is achieved by the provision of restriction means which is disposed downstream of the filter and upstream of the sampling or detecting means and which is pivotally mounted within the housing containing the filter for movement between a non-operative position disposed in general alignment with the direction of the airstream flowing through the filter and an operative position disposed transversely to the airstream. In its operative position, the restriction means partially restricts and imparts turbulence to the airstream flowing through the filter and thoroughly mixes the air and any leaking DOP so that the sampling means will be assured of detecting a representative portion of the DOP.

The present invention relates to an improvement of the method and apparatus as disclosed in the above prior patent. More particularly, it has been found that the transition, plenum connections, flanges, and other duct components located upstream of the housing, can unless carefully designed, result in non-uniform flow among the several filters in the bank, as well as non-uniform flow to various portions of a single filter. This non-uniform flow in turn renders it difficult uniformly to disperse the DOP to the filters during the test procedure.

It is accordingly an object of the present invention to provide a method and apparatus for the leak testing of filters, which includes a structurally simple, yet highly efficient means for effectively dispersing an air-DOP mixture immediately upstream of a filter. Another object is to provide a method and apparatus for substantially uniformly balancing the air flow among the several filters in a filter bank, thereby to facilitate the uniform dispersion of DOP to each of the filters during a leak testing procedure.

From one aspect, the invention consists in a method for testing for leakage of particles of predetermined size through a bank of filters installed in a parallel arrangement in a housing, comprising the steps of passing an airstream concurrently through all of the filters in the bank, whilst dividing the airstream into isolated portions immediately upstream of each filter such that each isolated portion of the airstream passes through a single filter, introducing particles of predetermined size selectively within the isolated portions of the airstream, partially restricting and imparting turbulence simultaneously to the isolated portions of the airstream flowing through all of the filters at positions upstream of the filters and downstream of the positions at which the particles are introduced, thereby to mix the isolated portions of the airstream with particles selectively introduced into the isolated portions, disperse the isolated portions and entrained particles substantially uniformly over the full frontal areas of the associated filters and obtain a substantially balanced airflow among the isolated portions, which latter step includes moving a restriction member disposed within each of said isolated portions from a non-operative position disposed in general alignment with the direction of the airstream to an operative position disposed transversely to the airstream, and monitoring the airstream downstream of the bank of filters to detect at least a portion of any particles in the airstream, such that a determination may be made as to which of any of the filters in the bank is leaking.

From another aspect, the invention consists in apparatus for filtering an airstream through a bank of filters and having provision for testing for leakage of particles of predetermined size through or around any of the filters, comprising a housing adapted to form a part of an air duct system having an airstream passing therethrough, means for sealably mounting a bank of filters in parallel arrangement in said housing such that the airstream passing through the housing passes through the bank of filters, panel means mounted within said housing and immediately upstream of the bank of filters for dividing the housing into a separate air channel for each of the filters, and such that the airstream is divided into an isolated portion within each of the separate channels which passes through a single filter, means mounted within each of said separate channels for selectively introducing particles of predetermined size into the portion of the airstream passing therethrough, a restriction member mounted within each of the separate channels upstream of the associated filter and downstream of the particle introducing means, each restriction member being pivotable from a non-operative position disposed in general alignment with the isolated portion of the airstream flowing through its associated channel to an operative position disposed transversely to the airstream, and said restriction members, when in their operative positions, being adapted partially to restrict and impart turbulence simultaneously to the isolated portions flowing through all of the channels so as to provide turbulence throughout substantially the full cross sectional area of each isolated portion, and thereby mix the isolated portion with particles selectively introduced into the isolated portions by the particle introducing means, and also to achieve a substantially balanced flow among the isolated portions, and detecting means mounted within the housing downstream of the filter bank for detecting at least a portion of any particles in the airstream, thereby to permit a determination as to whether any of the particles are leaking through or around any of the filters in the filter bank.

From yet another aspect, this invention consists in apparatus for filtering an airstream and having provision for testing for leakage of particles of predetermined size through or around each of two filters mounted in series, comprising a housing defining an air passageway adapted to form a part of an air duct system having an airstream passing therethrough, means for sealably mounting first and second filters within the housing in a spaced apart, serial arrangement and such that the airstream passing through the housing passes serially through the first and then the second filter, means for selectively introducing particles of predetermined size into the airstream within the housing and immediately upstream of each filter, upstream detecting means and downstream detecting means mounted respectively upstream and downstream of the second filter for detecting at least a portion of any particles in the airstream thereby to permit a determination as to whether any of the particles is leaking through or around the first and second filters, a first restriction member mounted upstream of the first filter and downstream of the associated particle introducing means for selectively partially restricting the airstream and imparting turbulence thereto, so as to mix the airstream and particles introduced by said associated particle introducing means during testing of the first filter, and then for dispersing the airstream substantially over the full frontal area of the first filter, and a second restriction member mounted between the filters, downstream of the particle introducing means associated with the second filter and upstream of the upstream detecting means, said second restriction member serving for selectively partially restricting the airstream and imparting turbulence thereto, so as to mix the airstream and particles introduced by its associated particle introducing means during testing of the second filter, and then for dispersing the airstream substantially over the full frontal area of the second filter, and also for mixing the airstream and leaking particles during testing of the first filter, each of said first and second restriction members being mounted within the housing for movement between a non-operative position disposed in general alignment with the sides of the housing and an operative position disposed transversely with respect to the housing.

Preferably, each restriction member is a funnel-shaped member which is mounted within the housing and has a base with a peripheral outline closely corresponding in size and configuration to the outline of the air passageway and an apex having an opening therethrough. The funnel-shaped member is movable between an operative position wherein the member is disposed transversely across the housing and the airstream is thereby condensed and passes through the opening in the funnel-shaped member, and a non-operative position wherein at least a substantial portion of the member is disposed along the side of the housing and is substantially withdrawn from interference with the airstream.

In a preferred embodiment, the housing is rectangular in cross-section, and the funnel-shaped member is in the form of a truncated four sided pyramid, and further comprises a tube affixed about the periphery of the opening and extending in a direction toward and perpendicular to the base of the pyramid. Also, the base of the pyramid is preferably disposed downstream of the apex thereof, so that the member acts to condense the airstream while imparting turbulence thereto, and the airstream exiting from the tube expands so that the airstream and particles are substantially uniformly dispersed over the full frontal area of the adjacent downstream filter.

Where the housing mounts a bank of filters in parallel, the invention contemplates the positioning of panels upstream of the filters to divide the housing into separate channels for the filters, and a funnel-shaped member as described above may be mounted immediately upstream of each filter within each of the channels. The filters may then be individually tested by initially moving all of the funnel-shaped members to their transverse operative positions, sequentially introducing DOP into each air channel upstream of the filter, and monitoring the airstream downstream of the filter, and monitoring the airstream downstream of the filter bank to detect for the presence of leaking DOP. By this procedure, the funnel-shaped members function to partially restrict the flow through each of the channels, resulting in a substantially balanced flow among the isolated portions. This in turn facilitates the uniform dispersion of the DOP within each channel.

Where the housing mounts a number of filters in series, a funnel-shaped member, as described above, may be mounted intermediate the filters, where it functions both to mix and condense the air passing through the upstream filter during testing thereof to permit a representative sample to be readily withdrawn and analyzed, and also to mix and disperse the particles in the airstream during the testing of the downstream filter.

In order that the present invention may be more readily understood, reference will now be made to the accompanying drawings, in which:—

Figure 1 is a perspective view of a filter test housing which embodies the features of the present invention;

Figure 2 is a perspective view, partly broken away, of the upper half of the filter housing shown in Figure 1;

Figure 3 is a sectional elevation view taken substantially along the line 3—3 of Figure 2, but with the final funnel-shaped member being shown in its non-operative position;

Figure 4 is a fragmentary perspective view illustrating the apparatus for restricting and distributing an airstream in accordance with the present invention;

Figure 5 is a front elevation view, on a reduced scale, of the upstream side of the apparatus shown in Figure 2;

Figure 6 is a fragmentary elevation view, illustrating the DOP sampling device and taken substantially along the line 6—6 of Figure 3;

Figure 7 is a sectional plan view of the upstream portion of the apparatus shown in Figure 3, but illustrating only one of the air channels; and

Figure 8 is a perspective view of the funnel-shaped member of the present invention, and illustrated in its non-operative position in the housing.

Referring more specifically to the drawings, one embodiment of the present invention is illustrated which includes a housing 12 which is adapted to form a part of an air duct system, such as an exhaust air cleaning system in a nuclear fuel manufacturing facility. More particularly, the housing 12 comprises a generally box-like enclosed structure having two side walls 14 and 15, a top wall 16, and a bottom wall 17. Also, the housing defines a forward open end which is joined to an air inlet opening of the inlet duct 21 via the transition member 22, and a rear open end which is similarly joined to the outlet duct 24 via the transition member 25. The housing is typically fabricated from a sheet metal material, such as 14 gauge stainless steel.

In the illustrated embodiment, the housing 12 mounts two banks of filters in series, with each bank comprising four filters 30 in parallel. Typically, each filter 30 is about 60 × 60 × 30 cms (24 × 24 × 12 inches) in size, and comprises a wooden or chipboard frame 31 surrounding and supporting a pleated filtering media 32, such as a non-woven fiberglass or cellulose-asbestos sheet material. Filters of this type may have extremely high dust retention characteristics, usually greater than about 95% efficiency, and typically 99.97% efficiency, as measured by the conventional DOP test, and are known as "absolute" or HEPA filters in the art.

The filters 30 of each bank are adapted to be inserted and removed from the housing 12 through the two associated side access doors 34, 35 with the two upper filters in each bank being inserted and removed through the upper door 34, and the two lower filters being inserted and removed through the lower door 35. As is well known in the art, clamping means as shown somewhat schematically in Figure 7 at 29, and sealing means are provided in the housing 12 for sealably mounting each of the filters therein. This sealing means may include a resilient gasket on the front peripheral face of the filter frame 31, or a fluid type seal such as shown schematically at 33 and as described in the U.S. Patent No. Re. 27,701 to Allan. Where a dangerous substance, such as radioactive material or viable organisms may be present on the filters or in the airstream, the housing may further include a conventional "bag-out" ring (not shown) about each of the access doors 34, 35 to permit the filters 30 to be enclosed in a plastic bag while being removed from the housing and thereby avoid possible contamination.

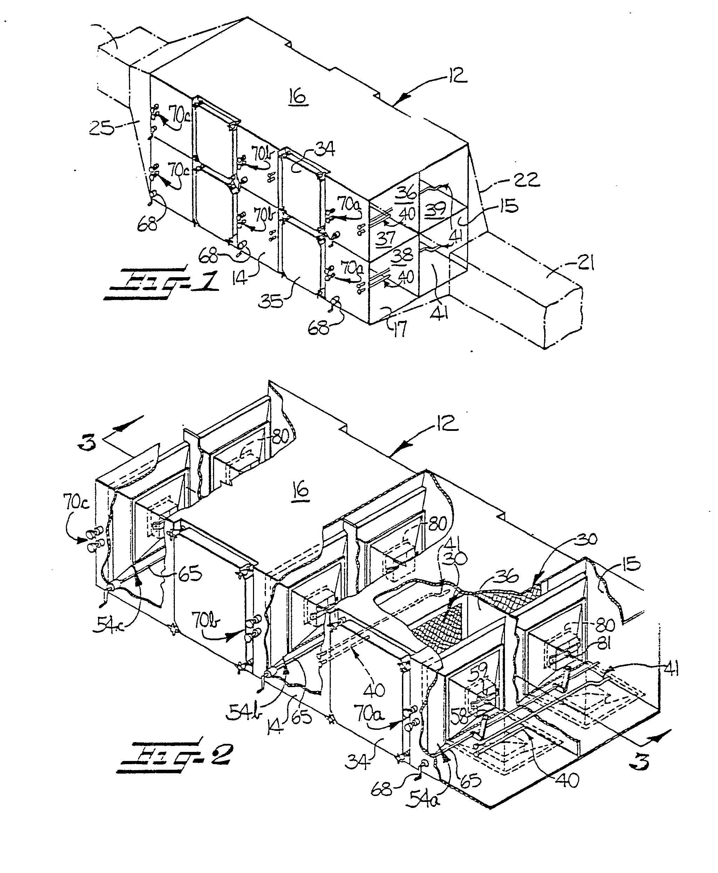

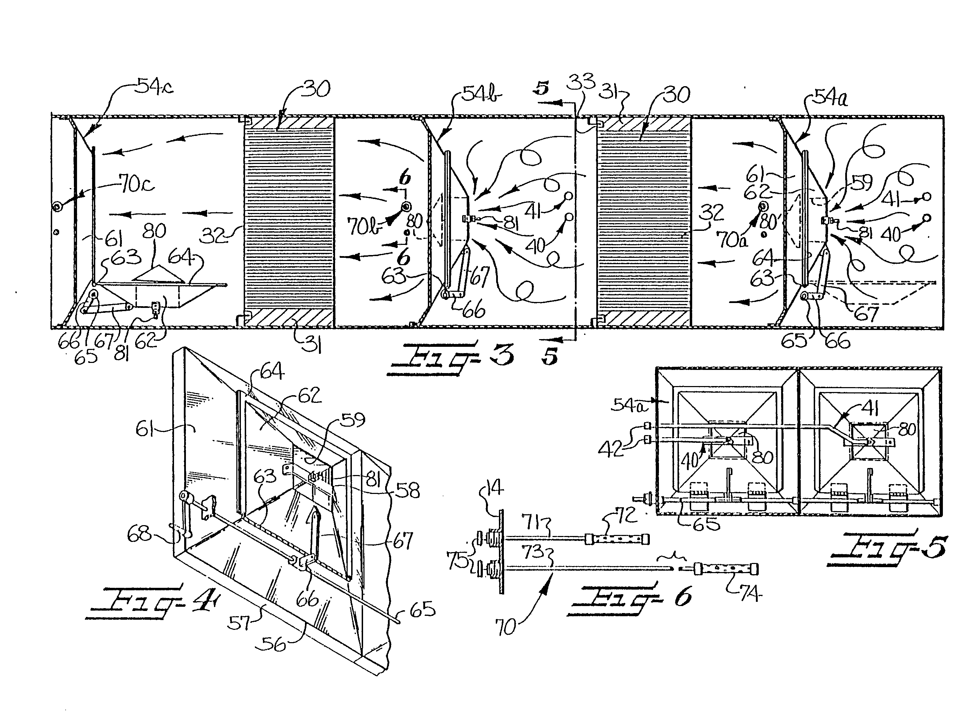

The portion of the housing 12 immediately upstream of each bank of filters is divided into four separate and rectangular air channels by means of the four perpendicularly disposed panels 36, 37, 38 and 39. Each channel is aligned with one of the filters, and generally conforms in cross-sectional outline and size to that of the associated filters. Thus for example, the panels 36 and 37 cooperate with the side wall 14 and top wall 16 to define a separate air channel upstream of the filter located in the upper left hand corner of the bank as seen in Figure 1. By this arrangement, the airstream entering the housing from the transition member 22 is divided by the panels into four equal portions with each portion being isolated from the other portions and directed to pass through a single filter. Where the housing mounts a number of banks of filters in series, the panels 36—39 may extend the entire distance between the banks as best seen in Figure 2 so as to similarly define air channels for the downstream filters. In this regard, it will be understood that the panels 36 and 38 are discontinuous at points immediately adjacent the filters to accommodate the sliding receipt of the inner filter, as well as the clamping mechanism 29, note Figure 7.

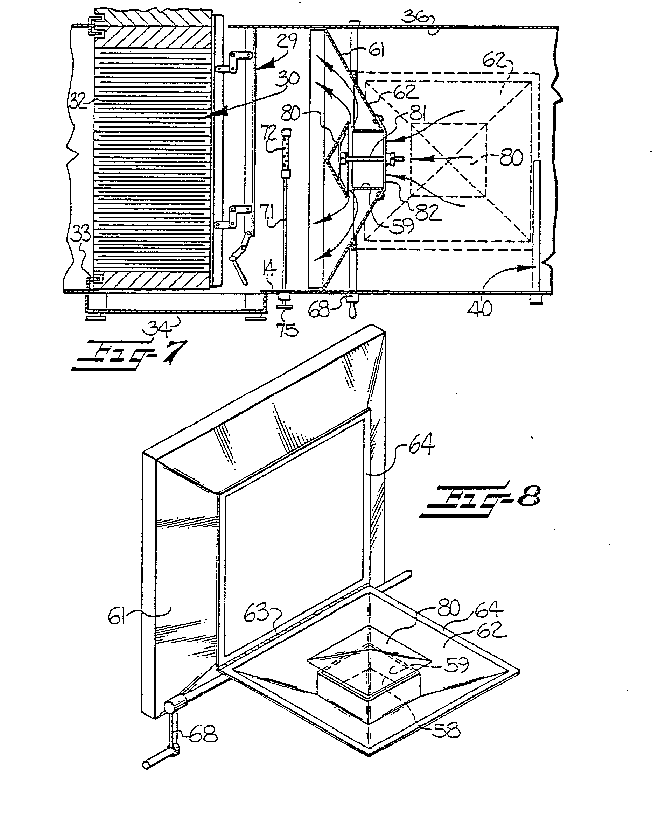

In accordance with the present invention, means are provided for selectively introducing particles of predetermined size (typically DOP particles having a mean diameter of between about 0.3 to 0.7 microns) in the portion of the airstream passing through each one of the channels. As illustrated, this particle introducing means comprises two pairs of supply pipes 40 and 41 which extend horizontally through the housing upstream of the first bank of filters. One pair of supply pipes is operatively associated with the two upper filters in each bank, and another pair is operatively associated with the two lower filters. As best seen in Figure 5, the pipe 40 terminates at a point centrally disposed in the adjacent air channel, and the pipe 41 extends to a central location in the far air channel. Both pipes include an exteriorly positioned cap 42, to permit the pipes to be selectively coupled to a DOP supply source.

The apparatus of the present invention also includes means mounted within each of the separate channels for selectively mixing the airstream and DOP particles, and then substantially uniformly dispersing the same over the full frontal area of the adjacent filter. In the illustrated embodiment, this mixing and dispersing means comprises restriction means in the form of a funnel-shaped member 54 mounted upstream of the filter and downstream of the associated DOP supply pipe. The funnel-shaped member 54 comprises a truncated, four sided pyramid which includes a base 56 which has a rectangular peripheral outline corresponding in size and configuration to the cross-sectional outline of the interior of the channel, and which defines a plane disposed transversely across the channel. A flange 57 is affixed to the base 56 to facilitate the mounting of the member in a rectangular duct. The member 54 also has an apex having a rectangular opening 56 therethrough, and a tube 59 having a rectangular cross-sectional outline corresponding to that of the opening 58. The tube is affixed to the periphery of the opening 58 and extends a substantial distance into the interior of the member and in a direction parallel to the direction of air flow, i.e., toward and perpendicular to the plane defined by the base 56. Preferably, the tube extends at least about onehalf the distance to the plane of the base 56.

A transverse deflector 80 overlies in spaced relation the free end of the tube 59, and as best seen in Figure 7, the deflector acts to laterally deflect the airstream moving through the tube, and thereby achieve a substantially uniform dispersion to the downstream filter. In the illustrated embodiment, the deflector 80 comprises a four sided pyramid which is disposed with its base overlying the downstream end of the tube 59. The deflector is attached to the tube by any suitable means, and as illustrated, the attachment means comprises a longitudinally directed threaded member 81 fixed to the inside of the deflector, and a cooperating transverse strap 82 mounted across the opening of the apex of the member 54. By this arrangement, longitudinal adjustment of the deflector with respect to the tube is permitted so that the spacing therebetween can be readily adjusted to best achieve the desired uniform dispersion.

The funnel-shaped member 54 also is composed of two separate components, namely, the lower base portion 61 which is adjacent the base 56, and a separate apex portion 62 adjacent the apex and including the tube 59 and deflector 80. The base portion 61 of the member 54 is fixedly mounted in the channel of the housing by welding or the like, and it may be described as being truncated to define a relatively large rectangular opening (not numbered) disposed centrally in the housing. The apex portion 62 is hingedly mounted to the base portion by a hinge 63 which extends transversely across the housing and adjacent the opening of the base portion. In addition, the two portions 61, 62 include mating flanges 64 to facilitate the interface thereof.

To more particularly describe the size and configuration of an exemplary embodiment of the member 54, the base 56 and opening 58 are each square in cross-section, with the base being about 60 cms (24 inches) along each side and the opening 58 being about 15 cms (6 inches) along each side. The flange 57 is about 2.5 cms (1 inch) wide, the longitudinal distance from the base 56 to the apex is about 13,25 cms (5.25 inches), and the tube 59 has a longitudinal length of about 7.5 cms (3 inches).

The apex portion 62 may be pivoted between an operative position wherein the member is in the form of a truncated pyramid which is disposed transversely across the air passageway, and a non-operative position (note the position of the member 54c in Figure 3) wherein the apex portion 62 is disposed along the side of the air passageway so as to be substantially withdrawn from interference with the airstream. The means for operatively controlling the positioning of the apex portion 62 of the member 54 comprises a control rod 65 which extends through the wall 14 of the housing and in a direction parallel to the hinged interconnection 63. A linkage 66, 67 interconnects the rod 65 and apex portion 62 (note Figure 4), and a crank 68 is positioned on the outside of the housing for rotating the rod to pivot the apex portion 62 between its operative and non-operative positions. In this regard, it will be noted that the rod 65 extends through the two laterally adjacent channels, such that the two members 54 are concurrently operated by rotation of the rod.

Viewing Figure 3, it will be seen that the housing includes a first funnel-shaped member 54a positioned upstream of the first filter, a second like funnel-shaped member 54b mounted immediately downstream of the first filter and upstream of the second filter, and a third like funnel-shaped member 54c which is mounted immediately downstream of the second filter.

The housing 12 also includes means for withdrawing a sample of the airstream at each of three separate locations along its length. A first sampling or detecting means 70a is provided immediately downstream of the first funnel-shaped member 54a, a second sampling means 70b immediately downstream of the second member 54b, and a third sampling means 70c immediately downstream of the third member 54c. Each of these three sampling means comprises a first pipe 71 extending laterally into the first adjacent channel and having an apertured sampler 72 positioned immediately downstream of and in alignment with the tube 59 of the adjacent funnelshaped member, and a second pipe 73 extending into the laterally remote channel and including a similarly positioned sampler 74, note Figure 6. Each pipe extends through the wall 14 of the housing, and includes a removable end cap 75 for permitting the sampler to be selectively connected to a conventional DOP detecting apparatus.

During normal operation of the filter housing 12, the apex portions 62 of all of the funnel-shaped members 54 are lowered into their non-operative position, so as to minimize air resistance. When leakage tests are to be conducted on the upstream bank, the apex portions 62 of the four members 54a which are upstream of the initial bank of filters, as well as the four members 54b immediately downstream of this bank, are all raised into their operative positions. The third members 54c preferably remain open, such that the various members are oriented in the manner shown in Figure 3.

The above disposition of the members results in the air flow being partially restricted as it moves through each of the four channels, and this restriction produces a back pressure upstream of the housing, which in turn serves to substantially balance the flow among the four channels. Thus an uneven flow pattern resulting from the design of the transition 22, plenum connections, or other upstream duct components, is avoided.

The DOP particles are then selectively and independently introduced into each of the four channels by means of their associated pipes 40 and 41. In each instance, the airstream and entrained particles approach the first member 54a, and substantial turbulence is imparted thereto to mix the particles and air as illustrated schematically in the right hand portion of Figure 3, and the airstream is condensed into the tube 59 of the member. As the airstream exits the tube 59 and deflector 80, it is dispersed over the full cross-sectional area of the channel. At relatively low flow rates, such as where testing is conducted for example at 20% of the designed flow rate of the housing, substantially uniform dispersion over the full frontal area of the filter is achieved. The first sampling means 70a may at this point in the test be connected to the DOP detecting apparatus to determine the upstream concentration of the DOP.

The airstream continues through the first filter and strikes the downstream second member 54b, which again imparts turbulence to the airstream and condenses it to pass through the tube 59 of the member. Thus the air and any leaking DOP is thoroughly mixed by the time it passes through the tube 59, and such that the sampler 72 (or 74), which is positioned immediately downstream of the tube 59 will be assured of picking up a representative portion of any leaking DOP when it is connected to the detecting apparatus. By this testing procedure, each filter in the first bank may be individually tested, so that the identification of a leaking filter is readily apparent.

To test the filters of the second bank, the four members 54a are preferably moved to their non-operative lowered position, and the two downstream sets of members 54b and 54c are each moved to their operative positions. DOP is then selectively introduced from the associated pipes 40, 41 into each of the four channels, and samples are withdrawn through the samplers of the third sampling means 70c to detect any leaking DOP in the manner described above. In this instance, it will be noted that the members 54b now serve the dual functions of balancing the flow to the second bank of filters, and mixing the air and DOP particles and dispersing the mixture to the second filters. Thus a single component in the housing, namely, the members 54b, perform distinctly different functions during the testing of the two filter banks.

## Claims

1. A method for testing for leakage of particles of predetermined size through a bank of filters (30) installed in a parallel arrangement in a housing (12), comprising the steps of passing an airstream concurrently through all of the filters (30) in the bank, whilst dividing the airstream into isolated portions immediately upstream of each filter such that each isolated portion of the airstream passes through a single filter (30), introducing particles of predetermined size selectively within the isolated portions of the airstream, partially restricting and imparting turbulence simultaneously to the isolated portions of the airstream flowing through all of the filters at positions upstream of the filters (30) and downstream of the positions (40, 41) at which the particles are introduced, thereby to mix the isolated portions of the airstream with particles selectively introduced into the isolated portions, disperse the isolated portions and entrained particles substantially uniformly over the full frontal areas of the associated filters, and obtain a substantially balanced airflow among the isolated portions, which latter step includes moving a restriction member (54) disposed within each of said isolated portions from a non-operative position disposed in general alignment with the direction of the airstream to an operative position disposed transversely to the airstream, and monitoring the airstream downstream of the bank of filters to detect at least a portion of any particles in the airstream, such that a determination may be made as to which of any of the filters in the bank is leaking.

2. A method according to claim 1, characterized in that the step of monitoring the airstream comprises simultaneously condensing all of the isolated portions of the airstream immediately downstream of the filters, whilst imparting turbulence thereto.

3. A method according to claim 2, characterized in that the step of monitoring the airstream comprises withdrawing samples of each of the condensed isolated portions of the airstream in a sequence corresponding to the sequence in which particles are selectively introduced into the isolated portions.

4. Apparatus for filtering an airstream and having provision for testing for leakage of particles of predetermined size through or around each of two filters (30) mounted in series, comprising a housing (12) defining an air passageway adapted to form a part of an air duct system having an airstream passing therethrough, means (33) for sealably mounting first and second filters (30) within the housing in a spaced apart, serial arrangement and such that the airstream passing through the housing passes serially through the first and then the second filter, means (40, 41) for selectively introducing particles of predetermined size into the airstream within the housing and immediately upstream of each filter, upstream detecting means (70b) and downstream detecting means (70c) mounted respectively upstream and downstream of the second filter for detecting at least a portion of any particles in the airstream thereby to permit a determination as to whether any of the particles is leaking through or around the first and second filters, a first restriction member (54a) mounted upstream of the first filter (30) and downstream of the associated particle introducing means (40, 41) for selectively partially restricting the airstream and imparting turbulence thereto, so as to mix the airstream and particles introduced by said associated particle introducing means during testing of the first filter, and then for dispersing the airstream substantially over the full frontal area of the first filter, and a second restriction member (54b) mounted between the filters, downstream of the particle introducing means (40, 41) associated with the second filter and upstream of the upstream detecting means (70b), said second restriction member (54b) serving for selectively partially restricting the airstream and imparting turbulence thereto, so as to mix the airstream and particles introduced by its associated particle introducing means during testing of the second filter, and then for dispersing the airstream substantially over the full frontal area of the second filter, and also for mixing the airstream and leaking particles during testing of the first filter, each of said first and second restriction members (54a, 54b) being mounted within the housing (12) for movement between a non-operative position disposed in general alignment with the sides of the housing and an operative position disposed transversely with respect to the housing.

5. Apparatus according to claim 4, characterized by a third restriction member (54c) movably mounted within the housing (12) downstream of the second filter, said downstream detecting means (70c) being positioned immediately downstream of said third restriction member (54c) for withdrawing a sample of the airstream to permit analysis of the same.

6. Apparatus for filtering an airstream through a bank of filters (30) and having provision for testing for leakage of particles of predetermined size through or around any of the filters, comprising a housing (12) adapted to form a part of an air duct system having an airstream passing therethrough, means (33) for sealably mounting a bank of filters in parallel arrangement in said housing such that the airstream passing through the housing passes through the bank of filters, panel means (36) mounted within said housing and immediately upstream of the bank of filters for dividing the housing into a separate air channel for each of the filters, and such that the airstream is divided into an isolated portion within each of the separate channels which passes through a single filter, means (40, 41) mounted within each of said separate channels for selectively introducing particles of predetermined size into the portion of the airstream passing therethrough, a restriction member (54) mounted within each of the separate channels upstream of the associated filter (30) and downstream of the particle introducing means (40, 41), each restriction member (54) being pivotable from a non-operative position disposed in general alignment with the isolated portion of the airstream flowing through its associated channel to an operative position disposed transversely to the airstream, and said restriction members (54), when in their operative positions, being adapted partially to restrict and impart turbulence simultaneously to the isolated portions flowing through all of the channels so as to provide turbulence throughout substantially the full cross sectional area of each isolated portion, and thereby mix the isolated portions with particles selectively introduced into the isolated portions by the particle introducing means, and also to achieve a substantially balanced flow among the isolated portions, and detecting means (54, 70) mounted within the housing downstream of the filter bank for detecting at least a portion of any particles in the airstream, thereby to permit a determination as to whether any of the particles are leaking through or around any of the filters in the filter bank.

7. Apparatus according to claim 6, characterized in that said detecting means (54, 70) comprises means (54) positioned immediately downstream of each filter (30) for selectively condensing and imparting turbulence to the portion of the airstream passing therethrough, and means (70) for withdrawing a sample of the airstream downstream thereof to permit an analysis of the same.

**Revendications**

1. Procédé pour détecter des fuites de particules de calibre prédéterminé à travers un groupe de filtres (30) installés en parallèle dans un boîtier (12), suivant lequel on fait passer un flux d'air en même temps à travers tous les filtres (30) du groupe tout en divisant ce flux d'air en des fractions isolées immédiatement en amont de chaque filtre de telle sorte que chaque fraction isolée du flux d'air traverse un seul filtre (38), on introduit des particules d'un calibre prédéterminé sélectivement dans les fractions isolées du flux d'air, on étrangle partiellement les fractions isolées du flux d'air qui traversent tous les filtes et on leur communique simultanément de la turbulence en des endroits situés en amont des filtres (30) et en aval des endroits (40, 41) où les particules sont introduites, de manière à mélanger les fractions isolées du flux d'air avec des particules qui y sont introduites sélectivement, à disperser les fractions isolées et les particules entraînées en substance uniformément sur la totalité des aires frontales des filtres associés et à obtenir un débit d'air en substance équilibré parmi les fractions isolées, cette dernière opération impliquant le déplacement d'un élément d'étranglement (54) disposé dans chacune des fractions isolées à partir d'une position inactive qui est en général en ligne avec la direction du flux d'air vers une position active disposée transversalement au flux d'air, et on surveille le flux d'air en aval du groupe de filtres pour détecter au moins une fraction d'éventuelles particules présentes dans le flux d'air de telle sorte qu'il soit possible de déterminer celui des filtes du groupe qui manque d'étanchéité.

2. Procédé suivant la revendication 1, caractérisé en ce que l'opération de surveillance du flux d'air implique simultanément la condensation de toutes les fractions isolées du flux d'air immédiatement en aval des filtres tout en leur communiquant de la turbulence.

3. Procédé suivant la revendication 2, caractérisé en ce que l'opération de surveillance du flux d'air implique le prélèvement d'échantillons de chacune des fractions isolées condensées du flux d'air dans un ordre correspondant à celui dans lequel des particules sont introduites sélectivement dans les fractions isolées.

4. Appareil pour filtrer un flux d'air comportant des moyens pour détecter les fuites de particules d'un calibre prédéterminé à travers chacun de deux filtres (30) montés en série ou autour de ceux-ci, comprenant un boîtier (12) définissant un passage d'air propre à faire partie d'un système de conduit d'air traversé par un flux d'air, un moyen (33) pour monter de manière étanche un premier et un second filtre (30) dans le boîtier selon une disposition en série dans laquelle ils sont espacés l'un de l'autre et le flux d'air qui traverse le boîtier passe en série à travers le premier, puis le second filtre, des moyens (40, 41) pour introduire sélectivement des particules d'un calibre prédéterminé dans le flux d'air à l'intérieur du boîtier et immédiatement en amont de chaque filtre, un moyen de détection d'amont (70b) et un moyen de détection d'aval (70c) montés respectivement en amont et en aval du second filtre pour détecter au moins une fraction d'éventuelles particules présentes dans le flux d'air en vue de pouvoir déterminer si des particules quelconques s'échappent à travers le premier et le second filtre ou autour de ceux-ci, un premier élément d'étranglement (54a) monté en amont du premier filtre (30) et en aval du moyen d'introduction de particules (40, 41) associé pour étrangler partiellement et sélectivement le flux d'air et lui communiquer de la turbulence de manière à mélanger le flux d'air et les particules introduites par le moyen d'introduction de particules associé pendant le contrôle du premier filtre, puis pour disperser le flux d'air en substance sur toute l'aire frontale du premier filtre, et un second élément d'étranglement (54b) monté entre les filtres, en aval du moyen d'introduction de particules (40, 41) associé au second filtre et en amont du moyen de détection d'amont (70b), le second élément d'étranglement (54b) servant à étrangler partiellement et sélectivement le flux d'air et à lui communiquer la turbulence de manière à mélanger le flux d'air et les particules introduites par son moyen d'introduction de particules associé pendant le contrôle du second filtre et ensuite pour disperser le flux d'air en substance sur la totalité de l'aire frontale du second filtre et pour mélanger le flux d'air et les particules qui s'échappent pendant le contrôle du premier filtre, le premier et le second élément d'étranglement (54a et 54b) étant chacun montés dans le boîtier (12) de manière à se déplacer entre une position inactive disposée en substance en ligne avec les côtés du boîtier et une position active disposée en travers du boîtier.

5. Appareil suivant la revendication 4, caractérisé par un troisième élément d'étranglement (54c) monté de façon mobile dans le boîtier (12) en aval du second filtre, le moyen de détection d'aval (70c) étant positionné immédiatement en aval du troisième élément d'étranglement (54c) pour prélever un échantillon du flux d'air en vue de permettre son analyse.

6. Appareil pour filtrer un flux d'air à travers un groupe de filtres (30) et comportant des moyens pour détecter des fuites de particules d'un calibre prédéterminé à travers le filtre ou autour de ceux-ci, comprenant un boîtier (12) propre à faire partie du système de conduit d'air traversé par un flux d'air, un moyen (33) pour monter de manière étanche un groupe de filtres en parallèle dans le boîtier de telle sorte que le flux d'air traversant le boîtier traverse le groupe de filtres, des panneaux (36) montés dans le boîtier et immédiatement en amont du groupe de filtres pour diviser le boîtier en un canal à air séparé pour chacun des filtres et de telle sorte que le flux d'air soit divisé en une fraction isolée dans chacun des canaux séparés qui traversent un seul filtre, un moyen (40, 41) monté dans chacun des canaux séparés pour introduire sélectivement des particules d'un calibre prédéterminé dans la dite fraction du flux d'air qui le traverse, un élément d'étranglement (54) monté dans chacun des canaux séparés en amont du filtre (30) associé et en aval du moyen d'introduction de particules (40, 41), chaque élément d'étranglement pouvant pivoter depuis une position inactive disposée en substance en ligne avec la fraction isolée du flux d'air qui traverse le canal associé vers une position active disposée en travers du flux d'air, et les éléments d'étranglement (54), lorsqu'ils se trouvent dans leurs positions actives, étant à même d'étrangler partiellement les fractions isolées qui traversent tous les canaux et de leur communiquer simultanément de la turbulence de manière à produire de la turbulence en substance dans la totalité de la section transversale de chaque section isolée et à mélanger ainsi les fractions isolées avec des particules qui y sont introduites sélectivement par le moyen d'introduction de particules, et à réaliser un écoulement en substance équilibré parmi les fractions isolées, et un moyen de détection (54, 70) monté dans le boîtier en aval du groupe de filtres pour détecter au moins une fraction d'éventuelles particules présentes dans le flux d'air, de manière à pouvoir déterminer si d'éventuelles particules s'échappent à travers l'un quelconque des filtres du groupe de filtres ou autour de celui-ci.

7. Appareil suivant la revendication 6, caractérisé en ce que le moyen de détection (54, 70) comprend un élément (54) placé immédiatement en aval de chaque filtre (30) pour sélectivement condenser et communiquer de la turbulence à la fraction du flux d'air qui le traverse, et un moyen (70) pour prélever un échantillon du flux d'air en aval en vue de permettre son analyse.

**Patentansprüche**

1. Verfahren zum Untersuchen von Verlusten von Partikeln bestimmter Größe durch eine Bank aus Filtern (30), deren Filter parallel in einem Gehäuse (12) montiert sind, bestehend aus folgenden Verfahrensschritten:

aus dem Durchlassen eines Luftstromes gleichzeitig durch alle Filter (30) der Bank bei Unterteilung des Luftstromes in isolierte Teile unmittelbar vor jedem Filter derart, daß jeder isolierte Teil des Luftstromes durch ein einzelnes Filter (30) strömt,

aus dem Einführen von Partikeln bestimmter Größe wahlweise in die isolierten Teile des Luftstromes,

aus dem teilweisen Einschränken und gleichzeitigem Erteilen einer Turbulenz der isolierten Teile der Luftströmung durch alle Filter in Lagen stromaufwärts des Filters (30) und stromabwärts in Lagen (40, 41), an denen die Partikel eingeführt werden, um dadurch die isolierten Teile des Luftstromes mit Partikeln zu mischen, die wahlweise in die isolierten Teile eingeführt werden,

aus dem Verteilen der isolierten Teile und der mitgenommenen Partikel im wesentlichen gleichmäßig über die vollen Vorderbereiche der zugehörigen Filter und aus dem Erreichen einer im wesentlichen ausbalancierten Luftströmung zwischen den isolierten Teilen, welch letzterer Schritt enthält das Bewegen eines in die Strömung einschwenkenden Gliedes (54), welches in jedem isolierten Teil aus einer nicht wirksamen Lage, die mit der Richtung der Luftströmung fluchtet, in eine wirksame Lage bewegbar ist, welche quer zum Luftstrom angeordnet ist,

und durch Kontrollieren des Luftstromes stromabwärts der Filter, um mindestens einen Teil von Partikeln im Luftstrom festzustellen bzw. zu ermitteln, derart, daß festgestellt werden kann, welches der Filter in der Bank undicht ist.

2. Verfahren nach Anspruch 1, dadurch gekennzeichnet, daß das Kontrollieren des Luftstromes aus dem gleichzeitigen Verdichten aller getrennten Teile des Luftstromes unmittelbar hinter den Filtern beim Aufzwingen von Turbulenz besteht.

3. Verfahren nach Anspruch 2, dadurch gekennzeichnet, daß das Kontrollieren des Luftstromes aus dem Entnehmen von Proben aus jedem der verdichteten, isolierten Teile des Luftstromes in einer Reihenfolge entsprechend der Reihenfolge durchgeführt wird, mit der Partikel wahlweise in die isolierten Teile eingeführt werden.

4. Vorrichtung zum Filtern eines Luftstromes und zum Prüfen von Verlusten von Partikeln bestimmter Größe durch jedes oder herum um jedes von zwei Filtern (30), die in Serie montiert sind, gekennzeichnet, durch ein Gehäuse (12), welches einen Luftkanal begrenzt, welcher geeignet ist, einen Teil eines Luftleitsystems zu bilden, durch das eine Luftströmung erfolgt,

durch Mittel (33) zur abdichtenden Montage erster und zweiter Filter (30) mit einem Abstand in Reihenanordnung im Gehäuse und derart, daß die Luftströmung, welche durch das Gehäuse erfolgt, reihenweise durch das erste und dann durch das zweite Filter strömt,

durch Mittel (40, 41) zum wahlweisen Einführen von Partikeln bestimmter Größe in den Luftstrom im Gehäuse und unmittelbar vor jedem Filter,

durch ermittelnde Mittel (70b) und stromabwärts ermittelnde Mittel (70c), die stromaufwärts und stromabwärts des zweiten Filters zur Ermittlung mindestens eines Teiles von Partikeln in dem Luftstrom, um dadurch eine Bestimmung zuzulassen, ob Partikel, durch das erste und zweite Filter oder darum herum verloren sind,

durch ein erstes Einschnürungsglied (54a) stromaufwärts des ersten Filters (30) und stromabwärts der zugehörigen Partikeleinführmittel (40, 41) zur wahlweisen teilweisen Einschnürung des Luftstromes und zum Erzeugen einer Turbulenz, derart, um den Luftstrom und Partikel, die durch die Einführmittel einfeführt sind, zu mischen, und zwar während der Prüfung des ersten Filters und dann zur Verteilung des Luftstromes im wesentlichen über den vollen Frontalbereich des ersten Filters,

und ein zweites Einschnürungsglied (54b) zwischen den Filtern und abwärts der die Partikel einführenden Mittel (40, 41), die dem zweiten Filter zugeordnet sind und stromaufwärts der stromaufwärts ermittelnden Mittel (70b), wobei das zweite einschnürende Glied (54b) zur wahlweisen teilweisen Einschnürung des Luftstromes dient und zur Erzeugung der Turbulenz, um so den Luftstrom und die Partikel, eingeführt durch die zugehörigen, Partikel einführenden Mittel während der Prüfung des zweiten Filters zu mischen und dann zum Verteilen des Luftstromes im wesentlichen über den vollen Frontbereich des zweiten Filters, und ebenfalls zum Mischen des Luftstromes und Verlustpartikel während der Erprobung des ersten Filters, wobei das erste und das zweite Einschnürungsglied (54a, 54b) im Gehäuse (12) zur Bewegung zwischen einer nicht wirksamen Stellung, fluchtend mit den Gehäuseseiten, und einer wirksamen Stellung montiert sind, welch letztere Stellung quer zum Gehäuse ausgerichtet ist.

5. Vorrichtung nach Anspruch 4, gekennzeichnet durch ein drittes Einschnürungsglied (54c), welches im Gehäuse 12 stromabwärts des zweiten Filters beweglich montiert ist, wobei die stromabwärts ermittelnden Mittel (70c) unmittelbar stromabwärts des dritten Einschnürungsgliedes (54c) zum Abziehen einer Luftstromprobe und dessen Analyse vorgesehen sind.

6. Vorrichtung zum Filtern eines Luftstromes durch eine Bank aus Filtern (30) mit Vorsehen einer Prüfung für Partikelverluste bestimmter Größe durch oder rundherum um eines der Filter, gekennzeichnet

durch ein Gehäuse (12), welches einen Teil eines Luftleitsystems einer Luftströmung bilden kann, die hindurchströmt,

durch Mittel (33) zum abdichtenden Montieren einer Bank aus Filtern in paralleler Anordnung im Gehäuse derart, daß der durch das Gehäuse strömende Luftstrom durch die Bank der Filter verläuft,

durch Platten (36) im Gehäuse unmittelbar stromaufwärts der Filterbank, um das Gehäuse in einen getrennten Luftkanal für jedes der Filter zu unterteilen,

und zwar derart, daß der Luftstrom in einem isolierten Teil in jedem der getrennten Kanäle die durch ein einzelnes Filter verlaufen, unterteilt ist,

durch Mittel (40, 41) in jedem der getrennten Kanäle zum wahlweisen Einführen von Partikeln bestimmter Größe in den Teil des Luftstromes, der durchströmt,

durch ein Einschnürmittel (54) in jedem der getrennten Kanäle stromaufwärts des zugehörigen Filters (30) und stromabwärts der die Partikel einführenden Mittel (40, 41), wobei jedes Einschnürglied (54) aus einer nicht wirksamen Stellung in Achsrichtung des Luftstromes durch seinen zugehörigen Kanal in eine wirksame Stellung verschwenkbar ist, die quer zum Luftstrom liegt,

und wobei die Einschnürungsglieder (54) in ihren wirksamen Stellungen in der Lage sind, teilweise den Luftstrom einzuschnüren und gleichzeitig eine Turbulenz auf die isolierten Teile aufzuzwingen, die durch alle Kanäle fließen, um eine Turbulenz über im wesentlichen den vollen Querschnittsbereich jedes isolierten Teiles zu erzeugen, und um dadurch die isolierten Teile mit wahlweise in die isolierten Teile durch Einführmittel eingeführten Partikel zu mischen und um auch eine im wesentlichen ausbalancierte Strömung zwischen den isolierten Teilen zu erreichen,

und durch Ermittlungsmittel (54, 70) im Gehäuse stromabwärts der Filterbank zur Ermittlung mindestens eines Teiles der Partikel in dem Luftstrom, um dadurch eine Bestimmung zuzulassen, ob Partikel durch eines der Filter oder um eines der Filter herum in der Filterbank verloren sind.

7. Vorrichtung nach Anspruch 6, dadurch gekennzeichnet, daß die Ermittlungsmittel (54, 70) aus Mitteln (54) unmittelbar stromabwärts jedes Filters (30) zum wahlweisen Verdichten und zum Aufzwingen einer Turbulenz auf den Teil des durchströmenden Luftstromes bestehen und aus Mitteln (70) zur Entnahme einer Probe des Luftstromes stromabwärts, um eine Analyse derselben zu ermöglichen.

FIG-1

FIG-2

1

Fig-3   Fig-4   Fig-5   Fig-6

Fig-7

Fig-8